# EUROPEAN PATENT APPLICATION

(11) **EP 4 286 026 A1**
(43) Date of publication of application: **06.12.2023**
(21) Application number: 22176464.0
(22) Date of filing: 31.05.2022
(51) Int. Cl.: B01D 11/02, B01D 15/00, C08G 65/00

(54) **METHOD FOR SEPARATING AN APROTIC POLAR SOLVENT FROM A MIXTURE COMPRISING WATER, THE APROTIC POLAR SOLVENT AND AT LEAST ONE INORGANIC SALT**

(71) Applicant: BASF SE, 67056 Ludwigshafen am Rhein (DE)
(72) Inventor: Burkard, Martin, 67056 Ludwigshafen am Rhein (DE); Hellmund, Mario Pascal, 67056 Ludwigshafen am Rhein (DE)
(74) Representative: Baier, Martin

(57) **Abstract**

The present invention relates to a method for separating an aprotic polar solvent (APS) from a first mixture (M1) comprising water, the aprotic polar solvent (APS) and at least one inorganic salt (IS). The method comprises the steps of passing the first mixture (M1) through an ion exchange unit (IEU) to separate at least part of the at least one inorganic salt (IS) from the first mixture (M1) to obtain a second mixture (M2), wherein the second mixture (M2) comprises water and the aprotic polar solvent (APS) (step a)), and feeding the second mixture (M2) obtained in step a) into a distillation unit (DU) to separate the aprotic polar solvent (APS) from the second mixture (M2) (step b)). Furthermore, the present invention relates to a method for separating an aprotic polar solvent (APS) from a first mixture (M1) comprising water, the aprotic polar solvent (APS) and at least one inorganic salt (IS), wherein the method comprises the steps of passing the first mixture (M1) through an ion exchange unit (IEU) to separate at least part of the at least one inorganic salt (IS) from the first mixture (M1) to obtain a second mixture (M2), wherein the second mixture (M2) comprises water and the aprotic polar solvent (APS) (step a)) and feeding the second mixture (M2) obtained in step a) into a membrane separation unit (MSU) to separate the aprotic polar solvent (APS) from the second mixture (M2) (step b-1)). In addition, the present invention relates to an aprotic polar solvent (APS) separated by the inventive methods.

## Description

The present invention relates to a method for separating an aprotic polar solvent (APS) from a first mixture (M1) comprising water, the aprotic polar solvent (APS) and at least one inorganic salt (IS). The method comprises the steps of passing the first mixture (M1) through an ion exchange unit (IEU) to separate at least part of the at least one inorganic salt (IS) from the first mixture (M1) to obtain a second mixture (M2), wherein the second mixture (M2) comprises water and the aprotic polar solvent (APS) (step a)), and feeding the second mixture (M2) obtained in step a) into a distillation unit (DU) to separate the aprotic polar solvent (APS) from the second mixture (M2) (step b)). Furthermore, the present invention relates to a method for separating an aprotic polar solvent (APS) from a first mixture (M1) comprising water, the aprotic polar solvent (APS) and at least one inorganic salt (IS), wherein the method comprises the steps of passing the first mixture (M1) through an ion exchange unit (IEU) to separate at least part of the at least one inorganic salt (IS) from the first mixture (M1) to obtain a second mixture (M2), wherein the second mixture (M2) comprises water and the aprotic polar solvent (APS) (step a)) and feeding the second mixture (M2) obtained in step a) into a membrane separation unit (MSU) to separate the aprotic polar solvent (APS) from the second mixture (M2) (step b-1)). In addition, the present invention relates to an aprotic polar solvent (APS) separated by the inventive methods.

Aprotic polar solvents (APS) such as N-methyl-pyrrolidone (NMP) are frequently used as solvents for chemical syntheses, while water often occurs as by-product and/or is used as co-solvent. In order to separate aprotic polar solvents (APS) from (reaction) mixtures comprising the aprotic polar solvents (APS) and water, often, processes like distillation or membrane separation are used. Especially during these separation processes, inorganic salts, which may have also been formed as by-products in the prior chemical syntheses, cause fouling, and corrosion or quality issues and, therefore, must be removed to maintain an efficient solvent separation. However, due to the good solubility of inorganic salts in mixtures comprising aprotic polar solvents (APS) and water, a sufficient salt removal is often difficult or even impossible.

An example for a chemical synthesis after which an aprotic polar solvent (APS), in particular N-methylpyrrolidone (NMP), has to be separated from a mixture comprising water, the aprotic polar solvent (APS) and at least one inorganic salt is the preparation of polyaryl ether polymers. The preparation of polyaryl ether polymers is generally effected by polycondensation of corresponding aromatic dihydroxyl compounds with aromatic dihalogen compounds, the polycondensation being conducted in N-methylpyrrolidone in the presence of potassium carbonate as base. The polyaryl ether polymers are obtained in the production process in the form of a solution comprising the polyaryl ether polymers dissolved in N-methylpyrrolidone. Furthermore, potassium chloride (KCI) is produced as a by-product, which must be separated in the subsequent process. Usually, the potassium chloride is removed from the solution by centrifugation. The purified solution then comprises the polyaryl ether polymer, which remains completely dissolved in NMP. This solution is then precipitated in water, wherein the polyaryl ether polymer is insoluble in water, while NMP and water are completely miscible. The precipitated polyaryl ether polymer is then separated from the NMP-water mixture by sieving and the NMP-water mixture is reprocessed in a distillation unit to separate NMP from the NMP-water mixture.

However, depending on how well the above-described centrifugation is carried out, the NMP-water mixture still comprises a certain amount of KCI, which leads to a contamination of the distillation unit and to fouling processes. Consequently, the distillation unit has to be cleaned very often, which makes the separation of NMP very time-consuming and expensive.

The object underlying the present invention is, therefore, to provide an improved method for separating an aprotic polar solvent (APS) from a mixture comprising water, the aprotic polar solvent and at least one inorganic salt, wherein the method should not exhibit the aforementioned disadvantages.

This object is achieved by a method for separating an aprotic polar solvent (APS) from a first mixture (M1) comprising water, the aprotic polar solvent (APS) and at least one inorganic salt (IS), comprising the steps of
a) passing the first mixture (M1) through an ion exchange unit (IEU) to separate at least part of the at least one inorganic salt (IS) from the first mixture (M1) to obtain a second mixture (M2), wherein the second mixture (M2) comprises water and the aprotic polar solvent (APS), and
b) feeding the second mixture (M2) obtained in step a) into a distillation unit (DU) to separate the aprotic polar solvent (APS) from the second mixture (M2).

Additionally, another object of the present invention is a method for separating an aprotic polar solvent (APS) from a first mixture (M1) comprising water, the aprotic polar solvent (APS) and at least one inorganic salt (IS), comprising the steps of
a) passing the first mixture (M1) through an ion exchange unit (IEU) to separate at least part of the at least one inorganic salt (IS) from the first mixture (M1) to obtain a second mixture (M2), wherein the second mixture (M2) comprises water and the aprotic polar solvent (APS), and
b-1) feeding the second mixture (M2) obtained in step a) into a membrane separation unit (MSU) to separate the aprotic polar solvent (APS) from the second mixture (M2).

Another object of the present invention is an aprotic polar solvent (APS) separated by the inventive methods.

It has surprisingly been found that, by the inventive processes, especially by step a), the at least one inorganic salt (IS) can be efficiently removed from the first mixture (M1).

In particular, by first passing the first mixture (M1) through the at least one anion exchanger (AE) and then through the at least one cation exchanger (CE), the formation of by-products in the subsequent separation process of the aprotic polar solvent (APS) (steps b) or b-1)) is reduced or avoided, respectively. As a result, the obtained aprotic polar solvent (APS) shows no or a reduced contamination with such by-products and has, therefore, an improved quality.

In addition, as the aprotic polar solvent (APS) separated in step b) (or step b-1)) shows no or a reduced contamination with by-products, in case this aprotic polar solvent (APS) is used in the synthesis of polymers, the product color of these polymers is significantly improved.

Furthermore, by the inventive process, the used reactors/vessels/columns no longer need to be cleaned as often, which saves time and money. As by the inventive method, also the corrosion of the reactors/vessels/columns is reduced, replacement and maintenance costs are minimized as well.

The present invention will be described in more detail hereinafter.

The method for separating an aprotic polar solvent (APS) from a first mixture (M1) comprising water, the aprotic polar solvent (APS) and at least one inorganic salt (IS), comprises at least the steps a) and b).

### Step a)

During step a), a first mixture (M1) is passed through an ion exchange unit (IEU) to separate at least part of the at least one inorganic salt (IS) from the first mixture (M1) to obtain a second mixture (M2), wherein the second mixture (M2) comprises water and the aprotic polar solvent (APS).

### First Mixture (M1)

The first mixture (M1) comprises water, an aprotic polar solvent (APS) and at least one inorganic salt (IS).

### Aprotic polar solvent (APS)

The term "aprotic polar solvent (APS)" is known to a person skilled in the art. In the context of the present invention "an aprotic polar solvent (APS)" is to be understood as meaning either precisely one aprotic polar solvent (APS) or else a mixture of two or more aprotic polar solvents (APS).

Examples of suitable aprotic polar solvents are aprotic polar solvents selected from the group consisting of N,N-dimethylformamide, N,N-dimethylacetamide, N-methylpyrrolidone, N-ethylpyrrolidone, dimethyl sulfoxide, dimethyl sulfone, sulfolane and diphenyl sulfone.

In a preferred embodiment, the aprotic polar solvent (APS) is an N-alkyl-pyrrolidone, preferably N-methylpyrrolidone and/or N-ethylpyrrolidone, more preferably N-methylpyrrolidone.

Another object of the present invention, therefore, is a method, wherein the aprotic polar solvent (APS) is an N-alkyl-pyrrolidone.

The first mixture (M1) preferably comprises from 60 to 90 % by weight, more preferably from 65 to 85 % by weight, of water and from 10 to 40 % by weight, more preferably from 15 to 35 % by weight, of the aprotic polar solvent (APS), wherein the weight percentages are each based on the total weight of the first mixture (M1).

Another object of the present invention, therefore, is a method, wherein the first mixture (M1) comprises from 60 to 90 % by weight of water and from 10 to 40 % by weight of the aprotic polar solvent (APS), wherein the weight percentages are each based on the total weight of the first mixture (M1).

### Inorganic salt (IS)

The first mixture (M1) also comprises at least one inorganic salt (IS). In the context of the present invention "at least one inorganic salt (IS)" is to be understood as meaning either precisely one inorganic salt (IS) or else a mixture of two or more inorganic salts (IS). Preferably, the first mixture (M1) comprises one inorganic salt (IS).

Preferably, the at least one inorganic salt (IS) is an alkali metal halide, more preferably an alkali metal chloride, most preferably potassium chloride and/or sodium chloride, and particularly preferably potassium chloride.

Another object of the present invention, therefore, is a method, wherein the at least one inorganic salt (IS) is an alkali metal chloride.

The first mixture (M1) preferably comprises the at least one inorganic salt (IS) in a concentration (CM1) in the range from 10 to 220 ppm by weight, more preferably in the range from 10 to 160 ppm by weight, wherein the ppm by weight are based on the total weight of the first mixture (M1).

Another object of the present invention, therefore, is a method, wherein the first mixture (M1) comprises the at least one inorganic salt (IS) in a concentration (CM1) in the range from 10 to 220 ppm by weight, wherein the ppm by weight are based on the total weight of the first mixture (M1).

In general, the inorganic salt (IS) comprises a cation and an anion, preferably an alkali metal cation and a halide, more preferably an alkali metal cation and a chloride and most preferably, a potassium and/or sodium cation and a chloride. Especially preferably, the inorganic salt (IS) comprises a potassium cation and a chloride. A halide is also referred to as a halide anion. A chloride is also referred to as a chloride anion.

Preferably, the first mixture (M1) comprises the cation in a concentration (CC) in the range from 5 to 120 ppm by weight, more preferably in the range from 5 to 85 ppm by weight, wherein the ppm by weight are based on the total weight of the first mixture (M1).

Preferably, the first mixture (M1) comprises the anion in a concentration (CA) in the range from 5 to 100 ppm by weight, more preferably in the range from 5 to 75 ppm by weight, wherein the ppm by weight are based on the total weight of the first mixture (M1).

Preferably, the first mixture (M1) has a pH-value in the range from 5.5 to 10, more preferably in the range from 6 to 9 and most preferably in the range from 8 to 9. Another object of the present invention, therefore, is a method, wherein the first mixture (M1) has a pH-value in the range from 5.5 to 10, preferably in the range from 6 to 9 and more preferably in the range from 8 to 9.

The first mixture (M1) preferably originates from a process for producing a polyaryl ether.

Another object of the present invention, therefore, is a method, wherein the first mixture (M1) originates from a process for producing a polyaryl ether.

Polyaryl ethers are known to those skilled in the art as a polymer class. Preferred polyaryl ethers are formed from units of the general formula (I): 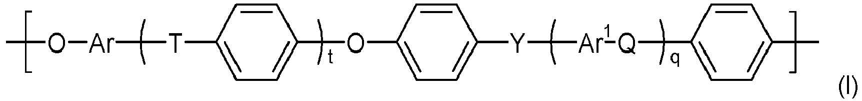 where the symbols t, q, Q, T, Y, Ar and Ar¹ are defined as follows:
- t, q:: each independently 0, 1, 2 or 3,
- Q, T, Y:: each independently a chemical bond or group selected from -O-, -S-,-SO₂-, S=O, C=O, -N=N- and -CR^{a}R^{b}- where R^{a} and R^{b} are each independently a hydrogen atom or a C₁₋C₁₂-alkyl, C₁-C₁₂-alkoxy or C₆-C₁₈-aryl group, and where at least one of Q, T and Y is -SO₂-, and
- Ar, Ar¹:: each independently an arylene group having from 6 to 18 carbon atoms.
If Q, T or Y, among the abovementioned conditions, is a chemical bond, this is understood to mean that the adjacent group to the left and the adjacent group to the right are bonded directly to one another via a chemical bond.

Preferably, however, Q, T and Y in formula (I) are each independently selected from - O- and -SO₂-, with the proviso that at least one of the group consisting of Q, T and Y is -SO₂-. These polyaryl ethers are polyaryl ether sulfones.

The present invention thus also provides a method in which the polyaryl ether is a polyaryl ether sulfone.

If Q, T or Y is -CR^{a}R^{b}-, R^{a} and R^{b} are each independently a hydrogen atom or a C₁-C₁₂-alkyl, C₁₋C₁₂-alkoxy or C₆-C₁₈-aryl group.

Preferred C₁₋C₁₂-alkyl groups comprise linear and branched, saturated alkyl groups having from 1 to 12 carbon atoms. Particular mention should be made of the following radicals: C₁-C₆-alkyl radical such as methyl, ethyl, n-propyl, i-propyl, n-butyl, sec-butyl, 2- or 3-methylpentyl and longer-chain radicals such as unbranched heptyl, octyl, nonyl, decyl, undecyl, lauryl and the singly or multiply branched analogs thereof.

Useful alkyl radicals in the aforementioned usable C₁-C₁₂-alkoxy groups include the alkyl groups defined further up having from 1 to 12 carbon atoms. Cycloalkyl radicals usable with preference include especially C₃-C₁₂-cycloalkyl radicals, for example cyclopropyl, cyclobutyl, cyclopentyl, cyclohexyl, cycloheptyl, cyclooctyl, cyclopropylmethyl, cyclopropylethyl, cyclopropylpropyl, cyclobutylmethyl, cyclobutylethyl, cyclopentylethyl, -propyl, -butyl, -pentyl, -hexyl, cyclohexylmethyl, -dimethyl, and -trimethyl.

Ar and Ar¹ are each independently a C₆-C₁₈-arylene group. Proceeding from the starting materials described below, Ar is preferably derived from an electron-rich aromatic substance subject to easy electrophilic attack, preferably selected from the group consisting of hydroquinone, resorcinol, dihydroxynaphthalene, especially 2,7-dihydroxynaphthalene, and 4,4'-bisphenol. Ar¹ is preferably an unsubstituted C₆- or C₁₂-arylene group.

Useful C₆-C₁₈-arylene groups Ar and Ar¹ include in particular phenylene groups such as 1,2-, 1,3- and 1,4-phenylene, naphthylene groups, for example 1,6-, 1,7-, 2,6- and 2,7-naphthylene, and the arylene groups derived from anthacene, phenanthrene and naphthacene.

Preferably, Ar and Ar¹ in the preferred embodiment of formula (I) are each independently selected from the group consisting of 1,4-phenylene, 1,3-phenylene, naphthylene, especially 2,7-dihydroxynaphthylene, and 4,4'-bisphenylene.

Preferred polyaryl ethers are those comprising at least one of the following units la to lo as repeat structural units:

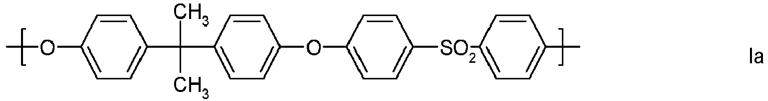

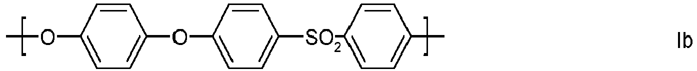

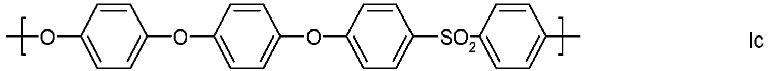

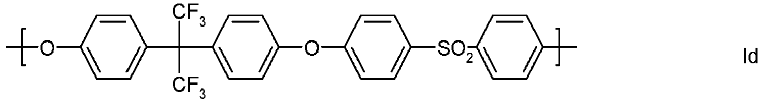

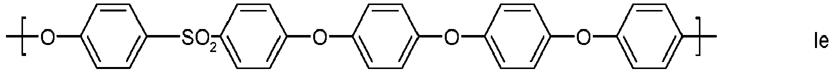

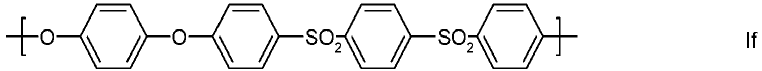

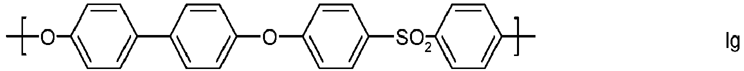

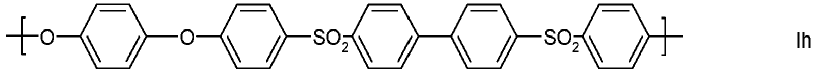

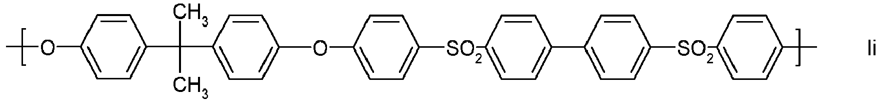

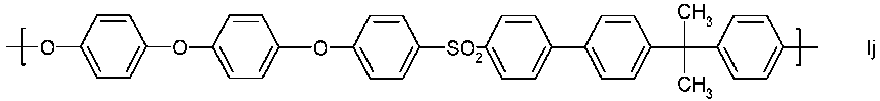

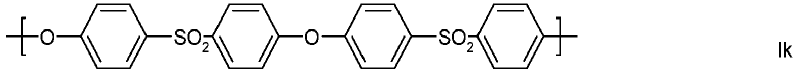

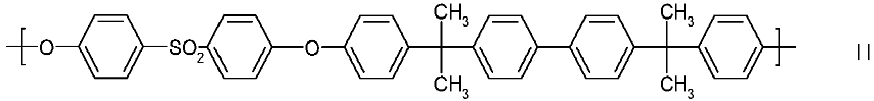

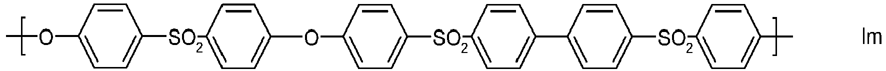

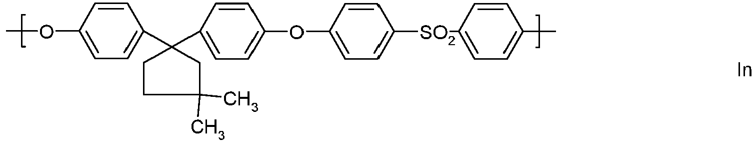

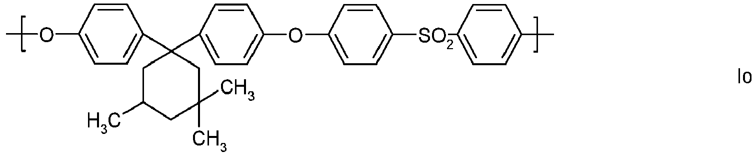

In addition to the preferred units la to lo, preference is also given to those units in which one or more 1,4-phenylene units which originate from hydroquinone are replaced by 1,3-phenylene units which originate from resorcinol or by naphthylene units which originate from dihydroxynaphthalene.

Particularly preferred units of the general formula (I) are the units la, Ig and Ik. It is also particularly preferred when the polyaryl ethers are formed essentially from one kind of units of the general formula (I), especially from a unit selected from la, Ig and Ik.

In a particularly preferred embodiment, Ar = 1,4-phenylene, t = 1, q = 0, T is a chemical bond and Y = SO₂. Particularly preferred polyaryl ether sulfones formed from the aforementioned repeat unit are referred to as polyphenylene sulfone (PPSU) (formula Ig).

In a further particularly preferred embodiment, Ar = 1,4-phenylene, t = 1, q = 0, T = C(CH₃)₂ and Y = SO₂. Particularly preferred polyaryl ether sulfones formed from the aforementioned repeat unit are referred to as polysulfone (PSU) (formula la).

In a further particularly preferred embodiment, Ar = 1,4-phenylene, t = 1, q = 0, T = Y = SO₂. Particularly preferred polyaryl ether sulfones formed from the aforementioned repeat unit are referred to as polyether sulfone (PESU) (formula Ik).

Abbreviations such as PPSU, PSU and PESU in the context of the present invention conform to DIN EN ISO 1043-1 (Plastics - Symbols and abbreviated terms - Part 1: Basic polymers and their special characteristics (ISO 1043-1:2001); German version EN ISO 1043-1:2002).

The polyaryl ethers preferably have weight-average molecular weights M_{w} of 10 000 to 150 000 g/mol, especially of 15 000 to 120 000 g/mol, more preferably of 18 000 to 100 000 g/mol, determined by means of gel permeation chromatography in a dimethylacetamide solvent against narrow-distribution polymethylmethacrylate as standard.

The polyaryl ethers preferably have a number-average molecular weight Mₙ of 10 000 to 35 000 g/mol, determined by means of gel permeation chromatography in a dimethylacetamide solvent against narrow-distribution polymethylmethacrylate as standard.

The polydispersity is preferably from 1.9 to 7.5, more preferably from 2.1 to 4.

In addition, the polyaryl ethers in pure substance preferably have an apparent melt viscosity at 350°C/1150 s⁻¹ of 100 to 1000 Pa s, preferably of 150 to 300 Pa s and especially preferably of 150 to 275 Pa s.

The melt viscosity was determined by means of a capillary rheometer. The apparent viscosity was determined at 350°C as a function of the shear rate in a capillary viscometer (Göttfert Rheograph 2003 capillary viscometer) with a circular capillary of length 30 mm, a radius of 0.5 mm, a nozzle inlet angle of 180°, a diameter of the reservoir vessel for the melt of 12 mm and with a preheating time of 5 minutes. The values reported are those determined at 1150 s⁻¹.

Preparation methods which lead to the aforementioned polyaryl ethers are known per se to those skilled in the art and are described, for example, in Herman F. Mark, "Encyclopedia of Polymer Science and Technology", third edition, Volume 4, 2003, "Polysulfones" chapter on pages 2 to 8, and in Hans R. Kricheldorf, "Aromatic Polyethers" in: Handbook of Polymer Synthesis, second edition, 2005, on pages 427 to 443.

Polyaryl ethers are preferably prepared by the reaction of a component (a1) comprising at least one aromatic dihydroxyl compound and a compound (a2) comprising at least one aromatic sulfone compound having two halogen substituents. The molar ratio of components (a1) to (a2) is preferably in the range from 0.99 to 1.4, more preferably in the range from 1.0 to 1.2 and most preferably in the range from 1.0 to 1.1.

The reaction is typically conducted in the presence of a carbonate compound (C).

Component (a1) comprises at least one aromatic dihydroxyl compound. Component (a1) especially comprises the following compounds:
- 4,4'-dihydroxybiphenyl;
- dihydroxybenzenes, especially hydroquinone and resorcinol;
- dihydroxynaphthalenes, especially 1,5-dihydroxynaphthalene, 1,6-dihydroxynaphthalene, 1,7-dihydroxynaphthalene and 2,7-dihydroxynaphthalene;
- dihydroxybiphenyls other than 4,4'-biphenol, especially 2,2'-biphenol;
- bisphenyl ethers, especially bis(4-hydroxyphenyl) ether and bis(2-hydroxyphenyl) ether;
- bisphenylpropanes, especially 2,2-bis(4-hydroxyphenyl)propane, 2,2-bis(3-methyl-4-hydroxyphenyl)propane and 2,2-bis(3,5-dimethyl-4-hydroxyphenyl)propane;
- bisphenylmethanes, especially bis(4-hydroxyphenyl)methane;
- bisphenylcyclohexanes, especially bis(4-hydroxyphenyl)-2,2,4-trimethylcyclohexane;
- bisphenyl sulfones, especially bis(4-hydroxyphenyl) sulfone;
- bisphenyl sulfides, especially bis(4-hydroxyphenyl) sulfide;
- bisphenyl ketones, especially bis(4-hydroxyphenyl) ketone;
- bisphenylhexafluoropropanes, especially 2,2-bis(3,5-dimethyl-4-hydroxyphenyl)hexafluoropropane; and
- bisphenylfluorenes, especially 9,9-bis(4-hydroxyphenyl)fluorene.

Preferably, component (a1) comprises at least 50% by weight, more preferably at least 60% by weight, particularly preferably at least 80% by weight and especially at least 95% by weight of at least one dihydroxyl component selected from the group consisting of 4,4'-dihydroxybiphenyl, 2,2-bis(4-hydroxyphenyl)propane and bis(4-hydroxyphenyl) sulfone, based in each case on the total weight of component (a1). Most preferably, component (a1) consists of at least one dihydroxyl component selected from the group consisting of 4,4'-dihydroxybiphenyl, 2,2-bis(4-hydroxyphenyl)propane and bis(4-hydroxyphenyl) sulfone.

2,2-Bis(4-hydroxyphenyl)propane is also known by the name bisphenol A. Bis(4-hydroxyphenyl) sulfone is also known by the name bisphenol S.

Preferably, component (a2) comprises at least 50% by weight, preferably at least 60% by weight, more preferably at least 80% by weight and especially at least 95% by weight of at least one aromatic sulfone compound having two halogen substituents, based in each case on the total weight of component (a2).

Aromatic sulfone compounds having two halogen substituents that are suitable as component (a2) are known in principle to those skilled in the art. Preferred components (a2) are especially dihalodiphenyl sulfones such as 4,4'-dichlorodiphenyl sulfone, 4,4'-difluorodiphenyl sulfone, 4,4'-dibromodiphenyl sulfone, 2,2'-dichlorodiphenyl sulfone and 2,2'-difluorodiphenyl sulfone. 4,4'-Dichlorodiphenyl sulfone and 4,4'-difluorodiphenyl sulfone are particularly preferred. Very particular preference is given to 4,4'-dichlorodiphenyl sulfone.

The reaction of 4,4'-dihydroxybiphenyl as component (a1) and 4,4'-dihalodiphenyl sulfone as component (a2) gives polyphenylene sulfone (PPSU) as polyaryl ether sulfone (formula Ig).

The reaction of bisphenol A as component (a1) and 4,4'-dihalodiphenyl sulfone as component (a2) gives polysulfone (PSU) as polyaryl ether sulfone (formula la).

The reaction of bisphenol S as component (a1) and 4,4'-dihalodiphenyl sulfone as component (a2) gives polyether sulfone (PESU) as polyaryl ether sulfone (formula Ik).

Preferred polyaryl ether sulfones are polyphenylene sulfone (PPSU) and polyether sulfone (PESU).

The polyaryl ethers may have a number of different end groups. For example, they may have hydroxide end groups, halogen end groups and/or alkoxide end groups. If the polyaryl ethers, after the production process, are reacted with an etherifying agent, the polyaryl ethers may also have ether end groups. Suitable etherifying agents are known to those skilled in the art and are, for example, organic monohalogen compounds.

Preferred etherifying agents are selected from the group consisting of chloromethane, bromomethane, iodomethane and dimethyl carbonate.

Suitable carbonate compounds (C) are known as such to those skilled in the art. Preferred carbonate compounds (C) are alkali metal carbonates and/or alkaline earth metal carbonates. Preferably, the carbonate compounds (C) are anhydrous. Suitable carbonate compounds (C) are especially anhydrous alkali metal carbonate, preferably anhydrous sodium carbonate, anhydrous potassium carbonate or mixtures thereof, very particular preference being given to anhydrous potassium carbonate.

The polyaryl ether can be prepared in the presence of a solvent or diluent.

Methods for preparing polyaryl ethers in the presence of a solvent or diluent are known as such to those skilled in the art. For this purpose, component (a1) and component (a2) are converted in an aprotic polar solvent (APS) in the presence of a carbonate compound (C). The solvent may optionally also comprise an azeotroping agent which forms an azeotrope with the water formed in the condensation reaction. Suitable aprotic polar solvents are, for example, selected from the group consisting of N,N-dimethylformamide, N,N-dimethylacetamide, N-methylpyrrolidone, N-ethylpyrrolidone, dimethyl sulfoxide, dimethyl sulfone, sulfolane and diphenyl sulfone. Suitable azeotroping agents are, for example, toluene and/or chlorobenzene.

The polyaryl ethers are preferably obtained in the production process in the form of a solution comprising the polyaryl ethers dissolved in the aprotic polar solvent (APS), especially N-methylpyrrolidone. Furthermore, at least one inorganic salt (IS), especially potassium chloride (KCI), is typically produced as a by-product. Usually, the at least one inorganic salt (IS) is (partially) removed from the solution by centrifugation. The purified solution then comprises the polyaryl ether, which remains completely dissolved in the aprotic polar solvent (APS). This solution is then preferably precipitated in water, wherein the polyaryl ether is insoluble in water, while the aprotic polar solvent (APS) and water are completely miscible. The precipitated polyaryl ether is then preferably separated from the APS-water mixture by sieving. Usually, the APS-water mixture still comprises a certain amount of KCI and corresponds to the first mixture (M1).

### Ion exchange unit (IEU)

The first mixture (M1) is passed through an ion exchange unit (IEU).

The ion exchange unit (IEU) preferably comprises at least one anion exchanger (AE) and at least one cation exchanger (CE).

Another object of the present invention, therefore, is a method, wherein the ion exchange unit (IEU) comprises at least one anion exchanger (AE) and at least one cation exchanger (CE).

In a preferred embodiment, in step a), the first mixture (M1) is first passed through the at least one anion exchanger (AE) and then passed through the at least one cation exchanger (CE).

Another object of the present invention, therefore, is a method, wherein, in step a), the first mixture (M1) is first passed through the at least one anion exchanger (AE) and then passed through the at least one cation exchanger (CE).

The at least one anion exchanger (AE) can be a strongly basic anion exchanger (AE) or a weakly basic anion exchanger (AE), preferably, the at least one anion exchanger (AE) is a strongly basic anion exchanger (AE). For a person skilled in the art, it is very clear what is meant by the term "strongly basic anion exchanger (AE)". A strongly basic anion exchanger (AE) can comprise quaternary ammonium groups, for example. Furthermore, for a person skilled in the art, it is also very clear what is meant by the term "weakly basic anion exchanger (AE)". A weakly basic anion exchanger (AE) can comprise primary, secondary or tertiary amino groups, for example.

Another object of the present invention, therefore, is a method, wherein the at least one anion exchanger (AE) is a strongly basic anion exchanger (AE) or a weakly basic anion exchanger (AE), preferably a strongly basic anion exchanger (AE).

The at least one anion exchanger (AE) can be macroporous or microporous. Preferably, the at least one anion exchanger (AE) is a microporous anion exchanger (AE).

Another object of the present invention, therefore, is a method, wherein the at least one anion exchanger (AE) is a microporous anion exchanger (AE).

An example for a strongly basic anion exchanger (AE) is the anion exchanger Lanxess Lewatit^{®} MonoPlus M 500.

The at least one cation exchanger (CE) can be a weakly acidic cation exchanger (CE) or a strongly acidic cation exchanger (CE), preferably the at least one cation exchanger (CE) is a weakly acidic cation exchanger (CE). For a person skilled in the art, it is very clear what is meant by the term "weakly acidic cation exchanger (CE)". A weakly acidic cation exchanger (CE) can comprise carboxylic acid groups, for example. Furthermore, for a skilled person in the art, it is also very clear what is meant by the term "strongly acidic cation exchanger (CE)". A strongly acidic cation exchanger (CE) can comprise sulfonic acid groups, for example.

Another object of the present invention, therefore, is a method, wherein the at least one cation exchanger (CE) is a weakly acidic cation exchanger (CE) or a strongly acidic cation exchanger (CE), preferably a weakly acidic cation exchanger (CE).

Examples for a weakly acidic cation exchanger (CE) are the cation exchanger Dow Amberlite^{™} HPR2900 H and the cation exchanger Dow Amberlite^{™} IRC86.

After step a), the at least one anion exchanger (AE) is preferably regenerated with caustic soda in a step a-1) and the at least one cation exchanger (CE) is preferably regenerated with sulfonic acid in a step a-2).

The regeneration can be carried out in co-current or counter-current.

### Second mixture (M2)

In step a), at least part of the at least one inorganic salt (IS) is separated from the first mixture (M1) and a second mixture (M2) is obtained, wherein the second mixture (M2) comprises water and the aprotic polar solvent (APS).

"at least part" in the context of the present invention means that the second mixture (M2) comprises less of the at least one inorganic salt (IS), based on the total weight of the second mixture (M2), than the first mixture (M1) comprises of the at least one inorganic salt (IS), based on the total weight of the first mixture (M1). Preferably, the second mixture (M2) comprises the at least one inorganic salt (IS) in a concentration (CM2) of < 220 ppm, wherein the ppm by weight are based on the total weight of the second mixture (M2).

In a preferred embodiment, the second mixture (M2) comprises the at least one inorganic salt (IS) in a concentration (CM2) of < 10 ppm by weight, wherein the ppm by weight are based on the total weight of the second mixture (M2).

In a more preferred embodiment, the second mixture (M2) comprises the at least one inorganic salt (IS) in a concentration (CM2) of < 1 ppm by weight, wherein the ppm by weight are based on the total weight of the second mixture (M2).

In an especially preferred embodiment, the second mixture (M2) comprises no inorganic salt (IS).

Another object of the present invention, therefore, is a method, wherein the second mixture (M2) comprises the at least one inorganic salt (IS) in a concentration (CM2) of < 10 ppm by weight, wherein the ppm by weight are based on the total weight of the second mixture (M2).

Preferably, the second mixture (M2) comprises the cation in a concentration (CC2) of < 120 ppm by weight, more preferably in a concentration (CM2) of < 10 ppm by weight, most preferably in a concentration (CM2) of < 5 ppm by weight, and especially preferably in a concentration (CM2) of < 1 ppm by weight, wherein the ppm by weight are based on the total weight of the second mixture (M2). It is clear for a skilled person that the second mixture (M2) comprises less of the cation, based on the total weight of the second mixture (M2), than the first mixture (M1) comprises of the cation, based on the total weight of the first mixture (M1).

Preferably, the second mixture (M2) comprises the anion in a concentration (CA2) of < 100 ppm by weight, more preferably in a concentration (CA2) of < 10 ppm by weight, most preferably in a concentration (CA2) of < 5 ppm by weight, and especially preferably in a concentration (CA2) of < 1 ppm by weight, wherein the ppm by weight are based on the total weight of the second mixture (M2). It is clear for a skilled person that the second mixture (M2) comprises less of the anion, based on the total weight of the second mixture (M2), than the first mixture (M1) comprises of the anion, based on the total weight of the first mixture (M1).

Step a) is preferably carried out at a temperature in the range from 25 to 55°C, more preferably in the range from 27 to 46°C, and at an absolute pressure in the range from 4 to 6 bar.

Another object of the present invention, therefore, is a method, wherein step a) is carried out
i) at a temperature in the range from 25 to 55°C, preferably in the range from 27 to 46°C, and/or
ii) at an absolute pressure in the range from 4 to 6 bar.

### Step b)

During step b), the second mixture (M2) obtained in step a) is fed into a distillation unit (DU) to separate the aprotic polar solvent (APS) from the second mixture (M2).

Preferably, the aprotic polar solvent (APS) separated in step b) comprises < 0.5 % by weight of water, based on the total weight of the aprotic polar solvent (APS) separated in step b).

Another object of the present invention, therefore, is a method, wherein the aprotic polar solvent (APS) separated in step b) comprises < 0.5 % by weight of water, based on the total weight of the aprotic polar solvent (APS) separated in step b).

### Distillation unit (DU)

The distillation unit (DU) preferably comprises at least one rectification column.

Another object of the present invention, therefore, is a method, wherein, in step b), the distillation unit (DU) comprises at least one rectification column.

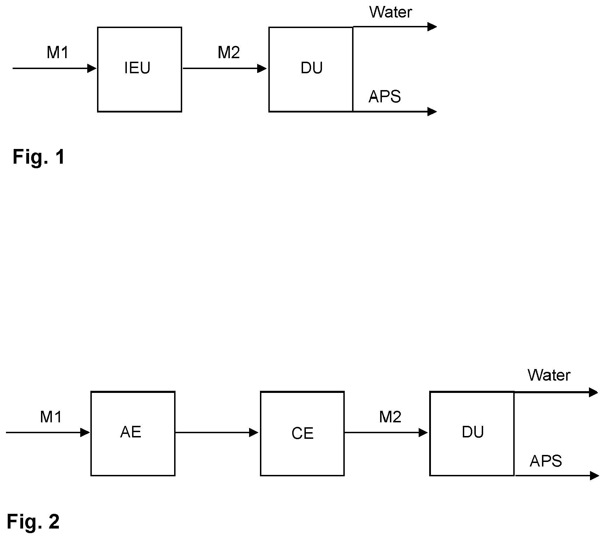

Figure 1 shows the scheme of the method for separating the aprotic polar solvent (APS) from the first mixture (M1): The first mixture (M1) is passed through an ion exchange unit (IEU), wherein a second mixture (M2) is obtained. The second mixture (M2) is fed into a distillation unit (DU) to separate the aprotic polar solvent (APS) from the second mixture (M2) to obtain water and the aprotic polar solvent (APS).

Figure 2 shows also the above-explained scheme of the method for separating the aprotic polar solvent (APS) from the first mixture (M1), wherein the first mixture (M1) is first passed through an anion exchanger (AE) and then passed through a cation exchanger (CE).

### Step b-1)

Instead of separating the aprotic polar solvent (APS) according to step b), it can also be separated from the second mixture (M2) obtained in step a) by a membrane separation process.

Another object of the present invention, therefore, is a method for separating an aprotic polar solvent (APS) from a first mixture (M1) comprising water, the aprotic polar solvent (APS) and at least one inorganic salt (IS), comprising the steps of
a) passing the first mixture (M1) through an ion exchange unit (IEU) to separate at least part of the at least one inorganic salt (IS) from the first mixture (M1) to obtain a second mixture (M2), wherein the second mixture (M2) comprises water and the aprotic polar solvent (APS), and
b-1) feeding the second mixture (M2) obtained in step a) into a membrane separation unit (MSU) to separate the aprotic polar solvent (APS) from the second mixture (M2).

A further object of the present invention is also an aprotic polar solvent (APS) separated by an inventive method described above.

The present invention is described in more detail by the examples hereinafter without being restricted thereto.

### Examples

### Inventive example I1

### a) Materials

The following components are used:
(M1) The first mixture (M1) comprises 75.5 % by weight of water and 24.5 % by weight of N-methyl-pyrrolidone, wherein the weight percentages are each based on the total weight of the first mixture (M1). The first mixture (M1) further comprises 151 ppm KCI (71 ppm Cl⁻ and 80 ppm K⁺). It has a pH-value of 7.4.

### b) Analytical methods

The concentration of K⁺ and Cl⁻ is determined by a spectrophotometer (Hach Lange DR 6000).

### c) Separation of KC/

The first mixture is first passed through an anion exchanger (AE) (Lanxess Lewatit^{®} MonoPlus M500) and then passed through a cation exchanger (CE) (Dow Amberlite^{®} IRC86).

The properties of the ion exchangers and the results are summerized in Table 1.

**Table 1**

| **Ion exchanger** | Anion exchanger (AE) | Cation exchanger (CE) |
|---|---|---|
| **Trade name** | Lanxess Lewatit^{®} MonoPlus M500 | Dow Amberlite^{®} IRC86 |
| **Type** | Strongly basic; microporous | Weakly acidic; microporus |
| **Feed concentrations [ppm]** | 71 (CA) | 80 (CC) |
| **Outflow concentrations [ppm]** | 9 (CA2) | 0 (CC2) |

As can be seen from Table 1, by first passing the mixture through a strongly basic anion exchanger (AE) and then through a weakly acidic cation exchanger (CE) (Dow Amberlite^{®} IRC86), the concentration of the KCI can be significantly decreased.

## Claims

1. A method for separating an aprotic polar solvent (APS) from a first mixture (M1) comprising water, the aprotic polar solvent (APS) and at least one inorganic salt (IS), comprising the steps of
a) passing the first mixture (M1) through an ion exchange unit (IEU) to separate at least part of the at least one inorganic salt (IS) from the first mixture (M1) to obtain a second mixture (M2), wherein the second mixture (M2) comprises water and the aprotic polar solvent (APS), and
b) feeding the second mixture (M2) obtained in step a) into a distillation unit (DU) to separate the aprotic polar solvent (APS) from the second mixture (M2).

2. Method according to claim 1, wherein the aprotic polar solvent (APS) is an N-alkyl-pyrrolidone.

3. Method according to claim 1 or 2, wherein the at least one inorganic salt (IS) is an alkali metal chloride.

4. Method according to any one of claims 1 to 3, wherein the ion exchange unit (IEU) comprises at least one anion exchanger (AE) and at least one cation exchanger (CE).

5. Method according to claim 4, wherein, in step a), the first mixture (M1) is first passed through the at least one anion exchanger (AE) and then passed through the at least one cation exchanger (CE).

6. Method according to claim 4 or 5, wherein
i) the at least one anion exchanger (AE) is a strongly basic anion exchanger (AE) or a weakly basic anion exchanger (AE), preferably a strongly basic anion exchanger (AE), and/or
ii) the at least one cation exchanger (CE) is a weakly acidic cation exchanger (CE) or a strongly acidic cation exchanger (CE), preferably a weakly acidic cation exchanger (CE), and/or
iii) the at least one anion exchanger (AE) is a microporous anion exchanger (AE).

7. Method according to any one of claims 1 to 6, wherein step a) is carried out
i) at a temperature in the range from 25 to 55°C, preferably in the range from 27 to 46°C, and/or
ii) at an absolute pressure in the range from 4 to 6 bar.

8. Method according to any one of claims 1 to 7, wherein the first mixture (M1) comprises the at least one inorganic salt (IS) in a concentration (CM1) in the range from 10 to 220 ppm by weight, wherein the ppm by weight are based on the total weight of the first mixture (M1).

9. Method according to any one of claims 1 to 8, wherein the first mixture (M1) comprises from 60 to 90 % by weight of water and from 10 to 40 % by weight of the aprotic polar solvent (APS), wherein the weight percentages are each based on the total weight of the first mixture (M1).

10. Method according to any one of claims 1 to 9, wherein, in step b), the distillation unit (DU) comprises at least one rectification column.

11. Method according to any one of claims 1 to 10, wherein the first mixture (M1) has a pH-value in the range from 5.5 to 10, preferably in the range from 6 to 9 and more preferably in the range from 8 to 9.

12. Method according to any one of claims 1 to 11, wherein the second mixture (M2) comprises the at least one inorganic salt (IS) in a concentration (CM2) of < 10 ppm by weight, wherein the ppm by weight are based on the total weight of the second mixture (M2).

13. Method according to any one of claims 1 to 12, wherein the aprotic polar solvent (APS) separated in step b) comprises < 0.5 % by weight of water, based on the total weight of the aprotic polar solvent (APS) separated in step b).

14. Method according to any one of claims 1 to 13, wherein the first mixture (M1) originates from a process for producing a polyaryl ether.

15. A method for separating an aprotic polar solvent (APS) from a first mixture (M1) comprising water, the aprotic polar solvent (APS) and at least one inorganic salt (IS), comprising the steps of
a) passing the first mixture (M1) through an ion exchange unit (IEU) to separate at least part of the at least one inorganic salt (IS) from the first mixture (M1) to obtain a second mixture (M2), wherein the second mixture (M2) comprises water and the aprotic polar solvent (APS), and
b-1) feeding the second mixture (M2) obtained in step a) into a membrane separation unit (MSU) to separate the aprotic polar solvent (APS) from the second mixture (M2).

16. An aprotic polar solvent (APS) separated by a method according to any one of claims 1 to 15.
